# EUROPÄISCHE PATENTSCHRIFT

(11) **EP 3 121 563 B1**
(45) Veröffentlichungstag und Bekanntmachung des Hinweises auf die Patenterteilung: **24.07.2019**
(21) Anmeldenummer: 16001001.3
(22) Anmeldetag: 04.05.2016
(51) Int. Cl.: G01C 21/36, G01C 21/34

(54) **VERFAHREN UND VORRICHTUNG ZUR WARNUNG VOR DEM LIEGENBLEIBEN EINES FAHRZEUGES**
DEVICE AND METHOD FOR WARNING OF A VEHICLE BREAKDOWN
PROCÉDÉ ET DISPOSITIF POUR AVERTIR D'UNE PANNE DE VEHICULE

(30) Priorität: 22.07.2015 DE 102015009465
(43) Veröffentlichungstag der Anmeldung: 25.01.2017
(73) Patentinhaber: AUDI AG, 85045 Ingolstadt (DE)
(72) Erfinder: Buchholz, Jan, DE - 84030 Ergolding (DE); Engel, Sebastian, DE - 85049 Ingolstadt (DE); Hohlstein, Björn, DE - 85053 Ingolstadt (DE)

(56) Entgegenhaltungen:
- DE-A1- 10 146 789
- DE-A1-102008 005 327

## Beschreibung

Die Erfindung betrifft ein Verfahren zur Unterstützung eines Fahrers eines Fahrzeugs, insbesondere eines Kraftfahrzeugs, nach dem Oberbegriff des Patentanspruches 1, eine Vorrichtung zur Unterstützung eines Fahrers eines Fahrzeugs, insbesondere eines Kraftfahrzeugs, nach dem Oberbegriff des Patentanspruches 11 sowie ein Fahrzeug, insbesondere ein Kraftfahrzeug, mit der Vorrichtung nach Patentanspruch 12.

Es ist bekannt, bei einem Fahrzeug ein Navigationssystem bzw. eine Navigationseinrichtung vorzusehen, mittels der der Fahrer ausgehend von einem Startort über eine definierte Fahrroute an einen Zielort geführt werden kann. Die Navigationseinrichtung kann dabei beispielsweise fest in das Fahrzeug integriert sein oder als mobile bzw. nachrüstbare Navigationseinrichtung ausgebildet sein.

Des Weiteren ist es auch bekannt, an der Navigationseinrichtung eine Funktion vorzusehen, mittels der mit den Informationen zu dem durchschnittlichen Kraftstoffverbrauch des Fahrzeugs und der in einem Kraftstofftank des Fahrzeugs gespeicherten Kraftstoffmenge zunächst die Reichweite des Fahrzeugs ermittelt bzw. abgeschätzt wird. Diese ermittelte Reichweite des Fahrzeugs wird dann bei der Festlegung einer Fahrroute derart berücksichtigt, dass bei einem Befahren der Fahrroute noch wenigstens eine Tankstelle mit dem Fahrzeug erreicht werden kann. Auf diese Weise wird ein Liegenbleiben des Fahrzeugs zuverlässig verhindert. Weiter ist auch eine Funktion bekannt, bei der der Fahrer selbsttätig bzw. automatisch mittels einer fahrzeugseitigen Warneinrichtung gewarnt wird, wenn zur Verhinderung eines Liegenbleibens des Fahrzeugs die nächste Tankstelle auf der Fahrroute des Fahrzeugs angefahren werden muss. Derartige Funktionen sind beispielsweise in der DE 10 2006 034 408 A1 offenbart. Aus der DE 101 46 789 A1 ist bekannt, nach Bestätigung durch den Fahrer eine geänderte Fahrtroute in die Navigationseinrichtung zu übernehmen, wenn dies zum Erreichen einer Tankstelle erforderlich ist. Falls die verbleibende Antriebsenergiemenge nicht zum Erreichen der angesteuerten Tankstelle ausreicht, kann der Fahrer mit einer fahrzeugexternen Hilfszentrale verbunden werden. Dies ist auch aus der DE 10 2008 005 327 A1 bekannt.

Problematisch ist es jedoch, wenn der Fahrer die Anweisungen der Navigationseinrichtung nicht beachtet. Weicht der Fahrer von der vorgegebenen Fahrroute ab, kann ein Liegenbleiben des Fahrzeugs häufig nicht mehr verhindert werden. Die Missachtung der Anweisungen der Navigationseinrichtung erfolgt dabei häufig unabsichtlich.

Aufgabe der Erfindung ist es daher, ein Verfahren und eine Vorrichtung zur Unterstützung eines Fahrers eines Fahrzeugs, insbesondere eines Kraftfahrzeugs, bereitzustellen, mittels denen der Fahrer bei einer Abweichung des Fahrzeugs von der vorgegebenen Fahrroute auf einfache und flexible Weise unterstützt wird.

Diese Aufgabe wird durch die Merkmale der unabhängigen Ansprüche gelöst. Bevorzugte Weiterbildungen sind in den Unteransprüchen offenbart.

Patentanspruch 1 definiert ein erfindungsgemäßes Verfahren.

Auf diese Weise wird der Fahrer bei einer Abweichung des Fahrzeugs von der vorgegebenen Fahrroute besonders einfach und flexibel unterstützt, da nun bei einer Abweichung von der vorgegebenen Fahrroute entweder selbsttätig mittels der Telefoneinrichtung eine telefonische Verbindung mit der Hilfszentrale hergestellt wird oder der Fahrer selbsttätig mittels der Anzeigeeinrichtung darauf hingewiesen wird, dass er die Hilfszentrale anrufen soll. Über die telefonische Verbindung mit der Hilfszentrale kann der Fahrer von einem Beratungspersonal der Hilfszentrale beispielsweise zunächst darauf hingewiesen werden, dass mit dem Fahrzeug voraussichtlich keine Tankstelle mehr erreicht werden kann. In Abhängigkeit von der aktuellen Verkehrssituation bzw. Betriebssituation des Fahrzeugs kann der Fahrer dann von dem Beratungspersonal über die weitere Vorgehensweise beraten werden. Beispielsweise kann das Beratungspersonal dem Fahrer zum spritsparenden Fahren anleiten. Zudem kann der Fahrer von dem Beratungspersonal beispielsweise zu einem Parkplatz bzw. zu einer sicheren Parkmöglichkeit gelotst werden. Weiter kann das Beratungspersonal beispielsweise auch einen Servicepartner verständigen, der sich mit einem geeigneten Reservekraftstoff hin zu der sicheren Parkposition des Fahrzeugs begibt. Informationen über die aktuelle Verkehrssituation bzw. Betriebssituation des Fahrzeugs können dem Beratungspersonal beispielsweise durch den Fahrer mitgeteilt werden. Die Hilfszentrale kann beispielsweise von einem Fahrzeughersteller betrieben werden. Die Hilfszentrale kann beispielsweise durch ein Call Center gebildet sein.

In einer bevorzugten Verfahrensführung weist das Fahrzeug eine Warnsignal-Ausgabeeinrichtung auf, mittels der selbsttätig bzw. automatisch ein Warnsignal an den Fahrer ausgegeben wird, wenn zur Verhinderung eines Liegenbleibens des Fahrzeugs die nächste Tankstelle auf der Fahrroute des Fahrzeugs angefahren werden muss. Mittels einer derartigen Warnsignal-Ausgabeeinrichtung kann der Fahrer auf zuverlässige und effektive Weise darauf hingewiesen werden, dass die nächste auf der Fahrroute des Fahrzeugs befindliche Tankstelle angefahren werden muss.

Weiter bevorzugt kann mittels der Navigationseinrichtung erfasst werden, ob nach Ausgabe des Warnsignals die nächste Tankstelle auf der Fahrroute des Fahrzeugs angefahren wird bzw. wurde, wobei, sofern nach Ausgabe des Warnsignals die nächste Tankstelle auf der Fahrroute des Fahrzeugs nicht angefahren wird, mittels der Navigationseinrichtung selbsttätig bzw. automatisch ermittelt wird, ob mit dem Fahrzeug noch wenigstens eine Tankstelle erreicht werden kann. Sofern keine Tankstelle mehr erreicht werden kann, wird dann wiederum selbsttätig eine telefonisch Verbindung mit der Hilfszentrale hergestellt oder selbsttätig mittels der Anzeigeeinrichtung angezeigt, dass der Fahrer eine telefonische Verbindung mit der Hilfszentrale herstellen soll. Das Warnsignal kann dabei beispielsweise durch ein akustisches und/oder durch ein optisches Signal gebildet sein.

Vorzugsweise werden, sofern eine telefonische Verbindung mit der Hilfszentrale hergestellt wird, insbesondere selbsttätig, mittels einer fahrzeugseitigen Daten-Übermittlungseinrichtung Fahrzeugdaten an die Hilfszentrale übermittelt. Dadurch kann das Beratungspersonal der Hilfszentrale zuverlässig und mit hoher Genauigkeit über die aktuelle Betriebssituation des Fahrzeugs informiert werden.

Bevorzugt umfassen die Fahrzeugdaten dabei Daten zu der aktuellen Position des Fahrzeugs und/oder Daten zu dem durchschnittlichen Antriebsenergieverbrauch des Fahrzeugs und/oder Daten zu der in der Energie-Speichereinrichtung des Fahrzeugs gespeicherten Antriebsenergiemenge und/oder Daten zu dem aktuellen, insbesondere elektrischen, Energieverbrauch des Fahrzeugs. Derartige Daten sind besonders relevant für das Beratungspersonal der Hilfszentrale, wenn das Fahrzeug liegenzubleiben droht.

Weiter bevorzugt weist das Fahrzeug wenigstens eine Energie-Stelleinrichtung auf, mittels der der, insbesondere elektrische, Energieverbrauch des Fahrzeugs eingestellt und/oder verstellt werden kann, wobei, sofern Daten zu dem aktuellen Energieverbrauch des Fahrzeugs an die Hilfszentrale übermittelt werden, die fahrzeugseitige Energie-Stelleinrichtung mittels einer Regel- und/oder Steuereinrichtung der Hilfszentrale geregelt bzw. gesteuert wird. Mittels einer derartigen Regel- und/oder Steuereinrichtung kann der Energieverbrauch des Fahrzeugs auf besonders komfortable und effektive Weise eingestellt bzw. verstellt werden. Mittels der Energie-Stelleinrichtung kann dabei beispielsweise die Energie zum Betreiben bestimmter Energieverbraucher des Fahrzeugs, beispielsweise einer Klimaanlage und/oder einer Sitzheizung des Fahrzeugs, verringert werden, wenn dadurch die Reichweite des Fahrzeugs erhöht wird.

In einer weiteren bevorzugten Verfahrensführung weist die Hilfszentrale eine signaltechnisch mit der fahrzeugseitigen Navigationseinrichtung verbindbare Daten-Übermittlungseinrichtung auf, mittels der, sofern eine telefonische Verbindung mit der Hilfszentrale hergestellt wird, insbesondere selbsttätig, Ortsdaten zu wenigstens einer mit dem Fahrzeug noch erreichbaren Parkplatz an die fahrzeugseitige Navigationseinrichtung übermittelt werden. Mittels einer derartigen Daten-Übermittlungseinrichtung kann der Fahrer des Fahrzeugs auf komfortable und zuverlässige Weise mittels der Navigationseinrichtung zu einem mit dem Fahrzeug noch erreichbaren Parkplatz geführt werden.

Weiter bevorzugt wird, sofern mit dem Fahrzeug keine Energie-Auffüllstation mehr erreicht werden kann, zeitlich gesehen, noch vor dem Liegenbleiben des Fahrzeugs, insbesondere selbsttätig, mittels einer fahrzeugseitigen Warnsignal-Sendeeinrichtung ein Warnsignal an zumindest einen Teil von Fahrzeugen ausgegeben, die sich in der Umgebung des Fahrzeugs befinden. Vorzugsweise wird das Warnsignal dabei an zumindest einen Teil von Fahrzeugen ausgegeben, die weniger als einen definierten Entfernungs-Wert, bevorzugt weniger als 5 km, von dem Fahrzeug entfernt sind. Auf diese Weise können Fahrzeuge, die sich in der unmittelbaren Umgebung des von der Fahrroute abgewichenen Fahrzeugs befinden, frühzeitig vor einem potentiellen Liegenbleiber gewarnt werden. Bevorzugt werden zudem diejenigen Fahrzeuge gewarnt, die sich, in Fahrtrichtung gesehen, hinter dem von der Fahrroute abgewichenen Fahrzeug auf der Fahrstrecke des von der Fahrroute abgewichen Fahrzeugs befinden. Das Warnsignal kann dabei beispielsweise mittels Car2x Kommunikation übertragen werden.

Car2x ist ein Überbegriff für verschiedene Übertragungstechnologien. Je nach Übertragungstechnologie können unterschiedliche Reichweiten erzielt werden. Zusätzlich besteht die Möglichkeit, dass die Informationen von Car2x-fähigen Fahrzeugen weitergeleitet werden, durch sogenanntes Hopping. Bei der Übertragung von Car2x Events (ein Event ist dabei beispielsweise das Liegenbleiben des von der Fahrroute abgewichenen Fahrzeugs) kann neben der reinen Information ebenfalls ein Relevanzgebiet übertragen werden, beispielsweise ein Kreis mit 5km Radius. Dadurch wissen Car2x-fähige Fahrzeuge wie weit die Information weitergeleitet werden muss und außerdem wissen die Empfangsfahrzeuge ob diese Information für sie relevant ist und daher gegebenenfalls eine Warnung an den Fahrer sinnvoll ist. Ein Event ist für ein Fahrzeug dabei üblicherweise besonders relevant je näher es ist.

In einer weiteren bevorzugten Verfahrensführung verfügt die Navigationseinrichtung über Daten zu dem durchschnittlichen Antriebsenergieverbrauch des Fahrzeugs und über Daten zu der in der Energie-Speichereinrichtung des Fahrzeugs gespeicherten Antriebsenergiemenge und über Daten zu der aktuellen Verkehrssituation des Fahrzeugs und über Straßendaten und/oder über Daten zu der aktuellen Position des Fahrzeugs. Mittels derartiger Daten kann zuverlässig und mit hoher Genauigkeit ermittelt werden, ob mit der in der Energie-Speichereinrichtung des Fahrzeugs gespeicherten Antriebsenergiemenge noch wenigstens eine Energie-Auffüllstation erreicht werden kann. Die Daten zu der aktuellen Verkehrssituation des Fahrzeugs können dabei beispielsweise durch Staudaten und/oder durch Daten zum Verkehrsnetz gebildet sein.

Weiter bevorzugt wird die Fahrroute derart mittels der Navigationseinrichtung festgelegt und/oder bestimmt, dass bei einem Einhalten der Fahrroute noch wenigstens eine Energie-Auffüllstation mit dem Fahrzeug erreicht werden kann.

Vorzugsweise wird der Fahrer, sofern mit dem Fahrzeug keine Energie-Auffüllstation mehr erreicht werden kann, zeitlich gesehen, noch vor der selbsttätigen Herstellung der telefonischen Verbindung mittels der fahrzeugseitigen Telefoneinrichtung, selbsttätig mittels einer fahrzeugseitigen Informationseinrichtung darüber informiert, dass mit dem Fahrzeug keine Energie-Auffüllstation mehr erreicht werden kann. Dadurch wird der Fahrer zuverlässig und schnell darüber informiert, dass das Fahrzeug liegenzubleiben droht. Der Fahrer kann dabei beispielsweise akustisch und/oder visuell informiert werden.

Zur Lösung der bereits genannten Aufgabe wird ferner eine Vorrichtung zur Unterstützung eines Fahrers eines Fahrzeugs gemäß Anspruch 11 beansprucht.

Die sich durch die erfindungsgemäße Vorrichtung ergebenden Vorteile sind identisch mit den bereits gewürdigten Vorteilen der erfindungsgemäßen Verfahrensführung, so dass diese an dieser Stelle nicht wiederholt werden.

Des Weiteren wird auch ein Fahrzeug, insbesondere ein Kraftfahrzeug mit der erfindungsgemäßen Vorrichtung beansprucht. Die sich hieraus ergebenden Vorteile sind ebenfalls identisch mit den bereits gewürdigten Vorteilen der erfindungsgemäßen Verfahrensführung, so dass diese an dieser Stelle ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen beispielhaft näher erläutert.

Es zeigen:
- Fig. 1: in einer schematischen Darstellung den Aufbau einer ersten Ausführungsform einer erfindungsgemäßen Vorrichtung;
- Fig. 2: in einer schematischen Darstellung die erfindungsgemäße Verfahrensführung mit der ersten Ausführungsform der Vorrichtung;
- Fig. 3: in einer Darstellung gemäß Fig. 1 eine zweite Ausführungsform der Vorrichtung;
- Fig. 4: in einer Darstellung gemäß Fig. 2 die erfindungsgemäße Verfahrensführung mit der zweiten Ausführungsform der Vorrichtung;
- Fig. 5: in einer Darstellung gemäß Fig. 1 eine dritte Ausführungsform der Vorrichtung; und

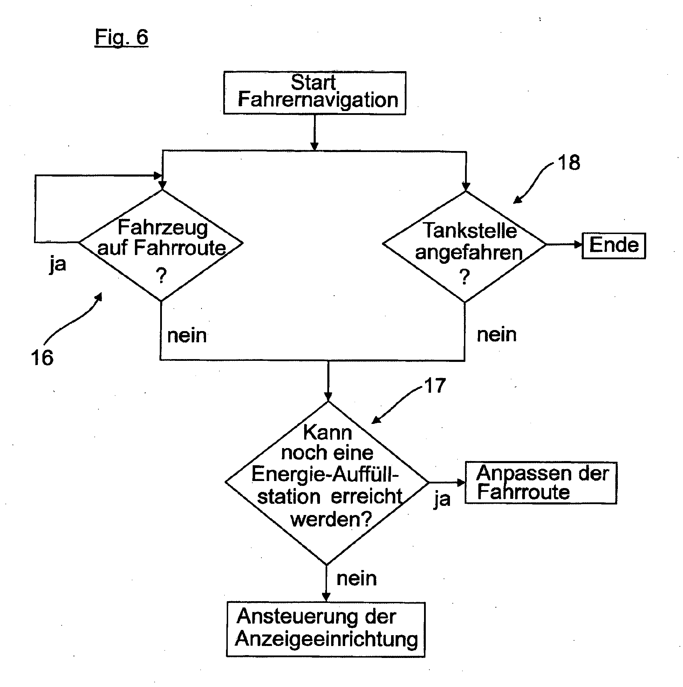

- Fig. 6: in einer Darstellung gemäß Fig. 2 die erfindungsgemäße Verfahrensführung mit der dritten Ausführungsform der Vorrichtung.

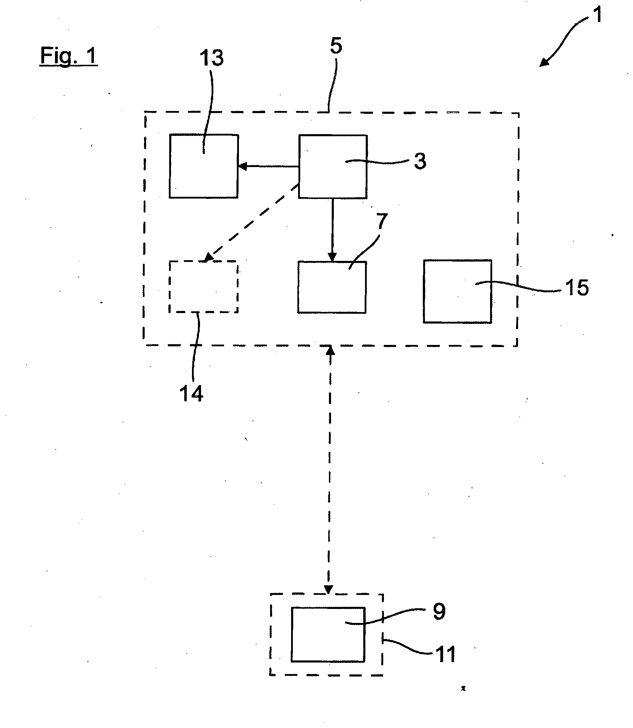

In Fig. 1 ist eine erste Ausführungsform einer erfindungsgemäßen Vorrichtung 1 gezeigt. Die Vorrichtung 1 weist eine Navigationseinrichtung 3 auf, die an einem in Fig. 1 mit gestrichelten Linien angedeuteten Fahrzeug 5 vorgesehen ist. Mittels der Navigationseinrichtung 3 kann ein Fahrer des Fahrzeugs 5 ausgehend von einem Startort über eine definierte Fahrroute an einen Zielort geführt werden. Die Fahrroute wird hier beispielhaft derart mittels der Navigationseinrichtung 3 festgelegt bzw. bestimmt, dass bei einem Einhalten der Fahrroute noch wenigstens eine Energie-Auffüllstation, beispielsweise eine Tankstelle, mit dem Fahrzeug 5 erreicht werden kann. Weiter kann mittels der Navigationseinrichtung 3 auch eine Abweichung des Fahrzeugs 5 von der Fahrroute selbsttätig bzw. automatisch erfasst werden.

Des Weiteren weist das Fahrzeug 5 hier beispielhaft auch eine signaltechnisch mit der Navigationseinrichtung 3 verbundene Warnsignal-Ausgabeeinrichtung 13 auf, mittels der selbsttätig bzw. automatisch ein Warnsignal an den Fahrer ausgegeben wird, wenn zur Verhinderung eines Liegenbleibens des Fahrzeugs 5 die nächste Energie-Auffüllstation auf der Fahrroute des Fahrzeugs 5 angefahren werden muss. Mittels der Navigationseinrichtung 3 kann hier zudem erfasst werden, ob nach Ausgabe des Warnsignals die nächste Tankstelle auf der Fahrroute des Fahrzeugs 5 angefahren wird bzw. wurde.

Wie in Fig. 1 weiter gezeigt ist, weist das Fahrzeug 5 hier beispielhaft auch eine durch den Fahrer des Fahrzeugs 5 betätigbare Warnsignal-Sendeeinrichtung 15 auf, durch deren Betätigung ein Warnsignal an Fahrzeuge ausgegeben wird, die sich, in Fahrtrichtung gesehen, hinter dem Fahrzeug 5 auf der Fahrstrecke des Fahrzeugs 5 befinden und weniger als einen definierten Entfernungs-Wert von dem Fahrzeug 5 entfernt sind. Mittels des Warnsignals werden die hinter dem Fahrzeug 5 fahrenden Fahrzeuge vor einem Liegenbleiben des Fahrzeugs 5 gewarnt. Bevorzugt beträgt der definierte Entfernungs-Wert dabei 5 km.

Zudem verfügt die Navigationseinrichtung 3 hier beispielhaft über Daten zu dem durchschnittlichen Antriebsenergieverbrauch des Fahrzeugs 5, über Daten zu der in der Energie-Speichereinrichtung des Fahrzeugs 5 gespeicherten Antriebsenergiemenge, über Daten zu der aktuellen Verkehrssituation des Fahrzeugs 5, über Straßendaten und über Daten zu der aktuellen Position des Fahrzeugs 5.

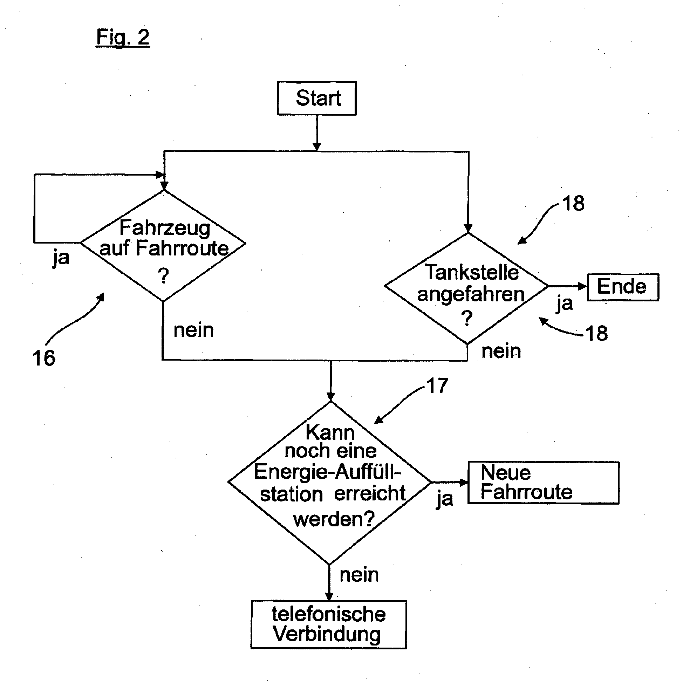

Im Folgenden wird ein beispielhafter Ablauf der erfindungsgemäßen Verfahrensführung anhand von Fig. 2 näher erläutert:
Nach dem Start der Fahrzeugnavigation wird mittels der Navigationseinrichtung 3 in einem Schritt 16 überprüft, ob sich das Fahrzeug 5 auf der mittels der Navigationseinrichtung 3 festgelegten Fahrroute befindet oder nicht. Sofern mittels der Navigationseinrichtung 3 eine Abweichung des Fahrzeugs 5 von der Fahrroute erfasst wird, wird mittels der Navigationseinrichtung 3 in einem Schritt 17 ermittelt, ob mit der in einer Energie-Speichereinrichtung des Fahrzeugs 5 gespeicherten Antriebsenergiemenge zum Antreiben des Fahrzeugs 5 noch wenigstens eine Energie-Auffüllstation erreicht werden kann. Sofern mit dem Fahrzeug 5 keine Energie-Auffüllstation mehr erreicht werden kann, wird hier beispielhaft, zeitlich gesehen, noch vor dem Liegenbleiben des Fahrzeugs 5 mittels einer signaltechnisch mit der Navigationseinrichtung 3 verbundenen, fahrzeugseitigen Telefoneinrichtung 7 (Fig. 1) selbsttätig bzw. automatisch eine telefonische Verbindung mit einer Telefoneinrichtung 9 einer in Fig. 1 mit gestrichelten Linien angedeuteten Hilfszentrale 11 hergestellt. Die Telefonverbindung kann dabei beispielsweise mittels einer Funkverbindung hergestellt werden.

Nach dem Herstellen der telefonischen Verbindung wird der Fahrer dann von einem Beratungspersonal der Hilfszentrale 11 über die weitere Vorgehensweise beraten. Zudem kann der Fahrer von dem Beratungspersonal der Hilfszentrale 11 angewiesen werden, die Warnsignal-Sendeeinrichtung 15 des Fahrzeugs 5 zu betätigen. Sofern in dem Schritt 17 mittels der Navigationseinrichtung 3 ermittelt wird, dass mit dem Fahrzeug 5 noch eine Energie-Auffüllstation erreicht werden kann, wird hier beispielhaft mittels der Navigationseinrichtung 3 eine neue Fahrröute festgelegt. Diese neue Fahrroute hat die noch erreichbare Energie-Auffüllstation als Zielort.

Sofern mittels der Warnsignal-Ausgabeeinrichtung 13 bereits ein Warnsignal an den Fahrer des Fahrzeugs 5 ausgegeben wurde, wird hier beispielhaft parallel zu dem Schritt 16 in einem Schritt 18 mittels der Navigationseinrichtung 3 überprüft, ob nach Ausgabe des Warnsignals die nächste Energie-Auffüllstation auf der Fahrroute des Fahrzeugs 5 angefahren wird oder nicht. Wird die nächste Energie-Auffüllstation auf der Fahrroute des Fahrzeugs 5 nicht angefahren, wird mittels der Navigationseinrichtung 3 ebenfalls selbsttätig der Schritt 17 durchgeführt.

Optional kann der Fahrer auch, zeitlich gesehen, noch vor der selbsttätigen Herstellung der telefonischen Verbindung mittels der fahrzeugseitigen Telefoneinrichtung 7, mittels einer signaltechnisch mit der Navigationseinrichtung 3 verbundenen, fahrzeugseitigen Informationseinrichtung 14 (Fig. 1) selbsttätig bzw. automatisch darüber informiert werden, dass mit dem Fahrzeug 5 keine Energie-Auffüllstation mehr erreicht werden kann.

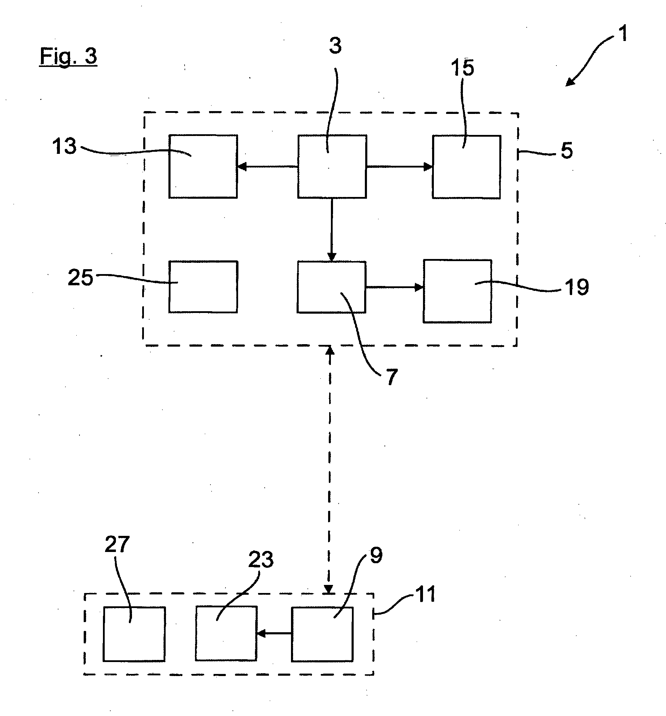

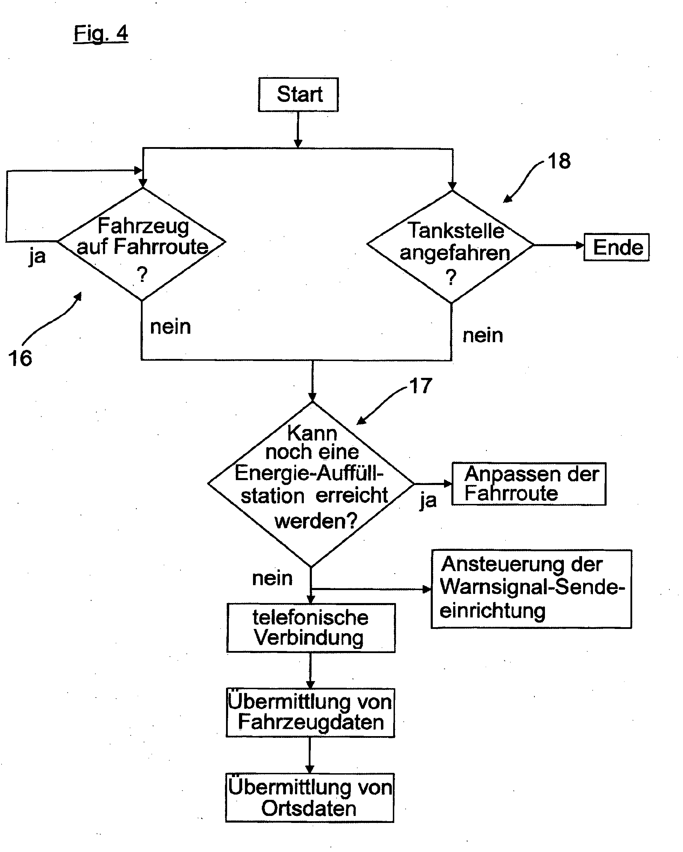

In Fig. 3 ist eine zweite Ausführungsform der Vorrichtung 1 gezeigt. Im Gegensatz zu der in Fig. 1 gezeigten ersten Ausführungsform der Vorrichtung 1 ist die Warnsignal-Sendeeinrichtung 15 hier signaltechnisch mit der Navigationseinrichtung 3 verbunden. Die Warnsignal-Sendeeinrichtung 15 wird hier, wie in Fig. 4 gezeigt ist, selbsttätig bzw. automatisch mittels der Navigationseinrichtung 3 angesteuert, wenn in dem Schritt 17 ermittelt wird, dass mit dem Fahrzeug 5 keine Energie-Auffüllstation mehr erreicht werden kann. Durch diese Ansteuerung wird mittels der Warnsignal-Sendeeinrichtung 15 das Warnsignal an die in der Umgebung des Fahrzeugs 5 befindlichen Fahrzeuge ausgegeben.

Wie in Fig. 3 weiter gezeigt ist, weist die zweite Ausführungsform der Vorrichtung 1 auch eine fahrzeugseitige, signaltechnisch mit der Telefoneinrichtung 7 verbundene Daten-Übermittlungseinrichtung 19 auf. Mittels dieser Daten-Übermittlungseinrichtung 19 werden nach Herstellung der telefonischen Verbindung zwischen dem Fahrzeug 5 und der Hilfszentrale 11 selbsttätig Fahrzeugdaten an die Hilfszentrale 11 übermittelt. Die Fahrzeugdaten umfassen hier beispielhaft Daten zu der aktuellen Position des Fahrzeugs 5, Daten zu dem durchschnittlichen Antriebsenergieverbrauch des Fahrzeugs 5, Daten zu der in der Energie-Speichereinrichtung des Fahrzeugs 5 gespeicherten Antriebsenergiemenge und Daten zu dem aktuellen Energieverbrauch des Fahrzeugs 5.

Die Datenübertragung zwischen dem Fahrzeug 1 und der Hilfszentrale 11 kann ebenfalls mittels einer Funkverbindung, beispielsweise mittels einer UMTS-Verbindung oder einer LTE-Verbindung, erfolgen.

Weiter weist die Hilfszentrale 11 der zweiten Ausführungsform der Vorrichtung 1 eine signaltechnisch mit der Telefoneinrichtung 9 verbundene Daten-Übermittlungseinrichtung 23 auf, mittels der nach der Herstellung der telefonischen Verbindung zwischen dem Fahrzeug 5 und der Hilfszentrale 11 selbsttätig Ortsdaten zu einem mit dem Fahrzeug 5 noch erreichbaren Parkplatz an die Navigationseinrichtung 3 übermittelt werden. Der noch erreichbare Parkplatz wird hier beispielhaft selbsttätig mittels der Navigationseinrichtung 3 als neuer Zielort eingestellt. Auf diese Weise kann der Fahrer des Fahrzeugs 5 besonders zuverlässig und komfortabel mittels der Navigationseinrichtung 3 zu dem mit dem Fahrzeug 5 noch erreichbaren Parkplatz geführt bzw. geleitet werden.

Des Weiteren weist das Fahrzeug 5 der zweiten Ausführungsform der Vorrichtung 1 auch eine Energie-Stelleinrichtung 25 auf, mittels der der elektrische Energieverbrauch des Fahrzeugs 5 eingestellt bzw. verstellt werden kann. Die Energie-Stelleinrichtung 25 wird nach der Übermittlung der Daten zu dem aktuellen Energieverbrauch des Fahrzeugs 5 an die Hilfszentrale 11 mittels einer Regel- und/oder Steuereinrichtung 27 der Hilfszentrale 11 geregelt bzw. gesteuert. Die Energie-Stelleinrichtung 25 kann dabei beispielsweise durch das Beratungspersonal der Hilfszentrale 11 gesteuert werden. Alternativ wäre es beispielsweise aber auch denkbar, die Energie-Stelleinrichtung 25 selbsttätig mittels der Regel- und/oder Steuereinrichtung 27 zu steuern bzw. zu regeln.

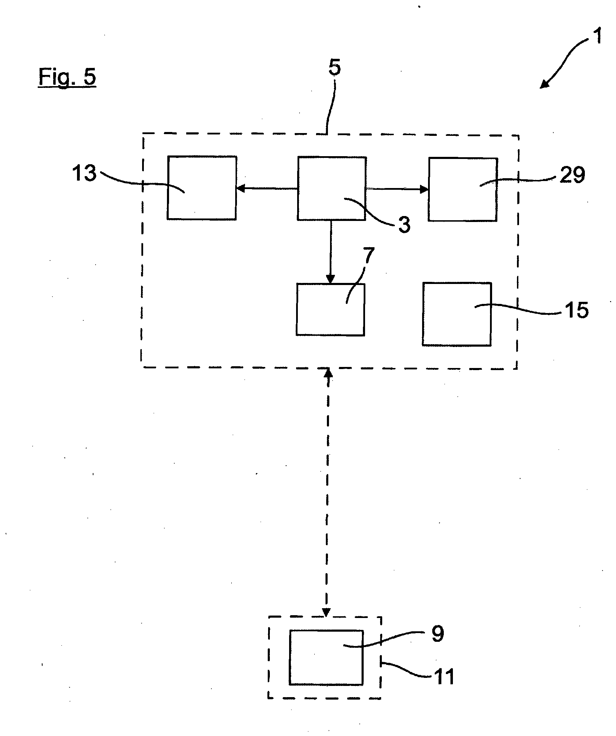

In Fig. 5 ist eine dritte Ausführungsform der Vorrichtung 1 gezeigt. Im Gegensatz zu der in Fig. 1 gezeigten ersten Ausführungsform weist die dritte Ausführungsform der Vorrichtung 1 eine signaltechnisch mit der Navigationseinrichtung verbundene, fahrzeugseitige Anzeigeeinrichtung 29, beispielsweise einen Bildschirm, auf. Die Anzeigeeinrichtung 29 wird hier selbsttätig bzw. automatisch mittels der Navigationseinrichtung 3 angesteuert, wenn in dem Schritt 17 ermittelt wird, dass mit dem Fahrzeug 5 keine Energie-Auffüllstation mehr erreicht werden kann. Durch diese Ansteuerung wird dem Fahrer mittels der Anzeigeeinrichtung 29 angezeigt, dass er eine telefonische Verbindung mit der Hilfszentrale 11 herstellen soll. Zudem ist die Navigationseinrichtung 3 hier auch nicht signaltechnisch mit der Telefoneinrichtung 7 verbunden. Die telefonische Verbindung zwischen dem Fahrzeug 5 und der Hilfszentrale 11 wird hier daher nicht selbsttätig bzw. automatisch, sondern durch den Fahrer des Fahrzeugs 5 hergestellt. Mittels der Anzeigeeinrichtung 29 kann dabei beispielsweise "Rufen Sie die Hilfszentrale an" angezeigt werden.

## Patentansprüche

1. Verfahren zur Unterstützung eines Fahrers eines Fahrzeugs, wobei das Fahrzeug (5) eine Navigationseinrichtung (3) aufweist, mittels der der Fahrer ausgehend von einem Startort über eine definierte Fahrroute an einen Zielort geführt wird, wobei mittels der Navigationseinrichtung (3) eine Abweichung des Fahrzeugs (5) von der Fahrroute selbsttätig erfassbar ist, **dadurch gekennzeichnet,**
**dass**, sofern mittels der Navigationseinrichtung selbsttätig eine Abweichung des Fahrzeugs (5) von der Fahrroute erfasst wird, mittels der Navigationseinrichtung (3) ermittelt wird, ob mit der in einer Energie-Speichereinrichtung des Fahrzeugs (5) gespeicherten Antriebsenergiemenge zum Antreiben des Fahrzeugs (5) noch wenigstens eine Energie-Auffüllstation erreicht werden kann,
**dass**, sofern mit dem Fahrzeug (5) keine Energie-Auffüllstation mehr erreicht werden kann, zeitlich gesehen, noch vor dem Liegenbleiben des Fahrzeugs (5) selbsttätig mittels einer fahrzeugseitigen Telefoneinrichtung (7) eine telefonische Verbindung mit einer fahrzeugexternen Hilfszentrale (11) hergestellt wird, oder
**dass**, sofern mit dem Fahrzeug (5) keine Energie-Auffüllstation mehr erreicht werden kann, zeitlich gesehen, noch vor dem Liegenbleiben des Fahrzeugs (5) dem Fahrer mittels einer fahrzeugseitigen Anzeigeeinrichtung (29) selbsttätig angezeigt wird, dass er eine telefonische Verbindung mit einer fahrzeugexternen Hilfszentrale (11) herstellen soll.

2. Verfahren nach Anspruch 1, **dadurch gekennzeichnet, dass** das Fahrzeug (5) eine Warnsignal-Ausgabeeinrichtung (13) aufweist, mittels der selbsttätig ein Warnsignal an den Fahrer ausgegeben wird, wenn zur Verhinderung eines Liegenbleibens des Fahrzeugs (5) die nächste Energie-Auffüllstation auf der Fahrroute des Fahrzeugs (5) angefahren werden muss.

3. Verfahren nach Anspruch 2, **dadurch gekennzeichnet, dass** mittels der Navigationseinrichtung (3) erfassbar ist, ob nach Ausgabe des Warnsignals die nächste Energie-Auffüllstation auf der Fahrroute des Fahrzeugs (5) angefahren wird, wobei, sofern nach Ausgabe des Warnsignals die nächste Energie-Auffüllstation auf der Fahrroute des Fahrzeugs (5) nicht angefahren wird, mittels der Navigationseinrichtung (3) selbsttätig ermittelt wird, ob mit dem Fahrzeug (5) noch wenigstens eine Energie-Auffüllstation erreicht werden kann.

4. Verfahren nach einem der vorhergehenden Ansprüche, **dadurch gekennzeichnet, dass**, sofern eine telefonische Verbindung mit der Hilfszentrale (11) hergestellt wird, insbesondere selbsttätig, mittels einer fahrzeugseitigen Daten-Übermittlungseinrichtung (19) Fahrzeugdaten an die Hilfszentrale (11) übermittelt werden.

5. Verfahren nach Anspruch 4, **dadurch gekennzeichnet, dass** die Fahrzeugdaten Daten zu der aktuellen Position des Fahrzeugs (5) und/oder Daten zu dem durchschnittlichen Antriebsenergieverbrauch des Fahrzeugs (5) und/oder Daten zu der in der Energie-Speichereinrichtung des Fahrzeugs (5) gespeicherten Antriebsenergiemenge und/oder Daten zu dem aktuellen, insbesondere elektrischen, Energieverbrauch des Fahrzeugs (5) umfassen.

6. Verfahren nach Anspruch 5, **dadurch gekennzeichnet, dass** das Fahrzeug (5) wenigstens eine Energie-Stelleinrichtung (25) aufweist, mittels der der, insbesondere elektrische, Energieverbrauch des Fahrzeugs (5) einstellbar und/oder verstellbar ist, wobei, sofern Daten zu dem aktuellen Energieverbrauch des Fahrzeugs (5) an die Hilfszentrale (11) übermittelt werden, die fahrzeugseitige Energie-Stelleinrichtung (25) mittels einer Regel- und/oder Steuereinrichtung (27) der Hilfszentrale (11) geregelt und/oder gesteuert wird.

7. Verfahren nach einem der vorhergehenden Ansprüche, **dadurch gekennzeichnet, dass** die Hilfszentrale (11) eine signaltechnisch mit der fahrzeugseitigen Navigationseinrichtung (3) verbindbare Daten-Übermittlungseinrichtung (23) aufweist, mittels der, sofern eine telefonische Verbindung mit der Hilfszentrale (11) hergestellt wird, insbesondere selbsttätig, Ortsdaten zu wenigstens einem mit dem Fahrzeug (5) noch erreichbaren Parkplatz an die fahrzeugseitige Navigationseinrichtung (3) übermittelt werden.

8. Verfahren nach einem der vorhergehenden Ansprüche, **dadurch gekennzeichnet, dass**, sofern mit dem Fahrzeug (5) keine Energie-Auffüllstation mehr erreicht werden kann, zeitlich gesehen, noch vor dem Liegenbleiben des Fahrzeugs (5), insbesondere selbsttätig, mittels einer fahrzeugseitigen Warnsignal-Sendeeinrichtung (15) ein Warnsignal an zumindest einen Teil von Fahrzeugen ausgegeben wird, die sich in der Umgebung des Fahrzeugs (5) befinden.

9. Verfahren nach einem der vorhergehenden Ansprüche, **dadurch gekennzeichnet, dass** die Navigationseinrichtung (3) über Daten zu dem durchschnittlichen Antriebsenergieverbrauch des Fahrzeugs und/oder über Daten zu der in der Energie-Speichereinrichtung des Fahrzeugs (5) gespeicherten Antriebsenergiemenge und/oder über Daten zu der aktuellen Verkehrssituation des Fahrzeugs (5) und/oder über Straßendaten und/oder über Daten zu der aktuellen Position des Fahrzeugs (5) verfügt.

10. Verfahren nach einem der vorhergehenden Ansprüche, **dadurch gekennzeichnet, dass** die Fahrroute derart mittels der der Navigationseinrichtung (3) festgelegt und/oder bestimmt wird, dass bei einem Einhalten der Fahrroute noch wenigstens eine Energie-Auffüllstation mit dem Fahrzeug (5) erreicht werden kann.

11. Vorrichtung (1) zur Unterstützung eines Fahrers eines Fahrzeugs (5), wobei die Vorrichtung eine Navigationseinrichtung (3) aufweist, mittels der der Fahrer ausgehend von einem Startort über eine definierte Fahrroute an einen Zielort führbar ist, wobei mittels der Navigationseinrichtung (3) eine Abweichung des Fahrzeugs (5) von der Fahrroute selbsttätig erfassbar ist, **dadurch gekennzeichnet,**
**dass**, sofern mittels der Navigationseinrichtung selbsttätig eine Abweichung des Fahrzeugs (5) von der Fahrroute erfasst wird, mittels der Navigationseinrichtung (3) ermittelt wird, ob mit der in einer Energie-Speichereinrichtung des Fahrzeugs (5) gespeicherten Antriebsenergiemenge zum Antreiben des Fahrzeugs (5) noch wenigstens eine Energie-Auffüllstation erreichbar ist,
**dass**, sofern mit dem Fahrzeug (5) keine Energie-Auffüllstation mehr erreichbar ist, zeitlich gesehen, noch vor dem Liegenbleiben des Fahrzeugs (5) selbsttätig mittels einer signaltechnisch mit der Navigationseinrichtung verbundenen, fahrzeugseitigen Telefoneinrichtung (7) eine telefonische Verbindung mit einer fahrzeugexternen Hilfszentrale (11) hergestellt wird, oder
**dass**, sofern mit dem Fahrzeug (5) keine Energie-Auffüllstation mehr erreichbar ist, zeitlich gesehen, noch vor dem Liegenbleiben des Fahrzeugs (5) dem Fahrer mittels einer mittels der Navigationseinrichtung angesteuerten fahrzeugseitigen Anzeigeeinrichtung (29) selbsttätig angezeigt wird, dass er eine telefonische Verbindung mit einer fahrzeugexternen Hilfszentrale (11) herstellen soll.

12. Fahrzeug, insbesondere Kraftfahrzeug, mit einer Vorrichtung nach Anspruch 11.

## Claims

1. Method for supporting a driver of a vehicle, wherein the vehicle (5) has a navigation device (3), by means of which the driver starting from a start location is guided via a defined drive route to a target location, wherein by means of the navigation device (3) a deviation of the vehicle (5) from the drive route can be automatically detected, **characterised in**
**that**, inasmuch as a deviation of the vehicle (5) from the drive route is detected automatically by means of the navigation device, it is determined by means of the navigation device (3) whether at least one energy charging station can still be reached with the drive energy quantity for driving the vehicle (5) stored in an energy storage device of the vehicle (5),
**that**, inasmuch as it is no longer possible for an energy charging station to be reached with the vehicle (5), in terms of time, even prior to the stranding of the vehicle (5), automatically, by means of a vehicle-side telephone device (7), a telephone connection is established with a help centre (11) external to the vehicle, or
**that**, inasmuch as it is no longer possible for an energy charging station to be reached with the vehicle (5), in terms of time, even prior to the stranding of the vehicle (5), it is automatically displayed to the driver by means of a vehicle-side display device (29) that he should establish a telephone connection with a help centre (11) external to the vehicle.

2. Method according to claim 1, **characterised in that** the vehicle (5) has a warning signal output device (13), by means of which a warning signal is automatically outputted to the driver, when for the prevention of a stranding of the vehicle (5) the nearest energy charging station on the drive route of the vehicle (5) should be driven to.

3. Method according to claim 2, **characterised in that** by means of the navigation device (3) it can be determined, whether after an outputting of the warning signal the next energy charging station on the drive route of the vehicle (5) is being driven to, wherein, inasmuch as after an outputting of the warning signal the next energy charging station on the drive route of the vehicle (5) is not driven to, by means of the navigation device (3) it is automatically determined whether it is still possible to reach at least one energy charging station with the vehicle (5).

4. Method according to any of the preceding claims, **characterised in that** inasmuch as a telephone connection with the help centre (11) is established, in particular automatically, by means of a vehicle-side data transmission device (19) vehicle data are transmitted to the help centre (11).

5. Method according to claim 4, **characterised in that** the vehicle data comprise data regarding the actual position of the vehicle (5) and/or data regarding the average drive energy usage of the vehicle (5) and/or data regarding the drive energy quantity stored in the energy storage device of the vehicle (5) and/or data regarding the actual, in particular electrical, energy usage of the vehicle (5).

6. Method according to claim 5, **characterised in that** the vehicle (5) has at least one energy actuating device (25) by means of which the, in particular electrical, energy usage of the vehicle (5) can be set and/or adjusted, wherein, inasmuch as data regarding the actual energy usage of the vehicle (5) are transmitted to the help centre (11), the vehicle-side energy actuating device (25) is regulated and/or controlled by means of a regulating and/or controlling device (27) of the help centre (11).

7. Method according to any of the preceding claims, **characterised in that** the help centre (11) has a data transmitting device (23), which can be connected via signal technology with the vehicle-side navigation device (3), by means of which, inasmuch as a telephone connection is established with the help centre (11), in particular automatically, location data regarding at least one parking space which is still able to be reached with the vehicle (5) are transmitted to the vehicle-side navigation device (3).

8. Method according to any of the preceding claims, **characterised in that**, inasmuch as it is no longer possible for an energy charging station to be reached with the vehicle (5), in terms of time, even prior to the stranding of the vehicle (5), in particular automatically, a warning signal is outputted by means of a vehicle-side warning signal transmitting device (15) to at least one proportion of vehicles which are located in the environment of the vehicle (5).

9. Method according to any of the preceding claims, **characterised in that** the navigation device (3) has data regarding the average drive energy usage of the vehicle and/or data regarding the drive energy quantity stored in the energy storage device of the vehicle (5) and/or data regarding the actual traffic situation of the vehicle (5) and/or road data and/or data regarding the actual position of the vehicle (5).

10. Method according to any of the preceding claims, **characterised in that** the drive route is determined and/or specified by means of the the navigation device (3) such that when the drive route is followed it is still possible for at least one energy charging station to be reached with the vehicle (5).

11. Device (1) for supporting a driver of a vehicle of a vehicle (5), wherein the device has a navigation device (3) by means of which the driver starting from a start location can be guided via a defined drive route to a target location, wherein by means of the navigation device (3) a deviation of the vehicle (5) from the drive route can be automatically detected, **characterised in**
**that**, inasmuch as a deviation of the vehicle (5) from the drive route is detected automatically by means of the navigation device, it is determined by means of the navigation device (3) whether with the drive energy quantity for driving the vehicle (5) stored in an energy storage device of the vehicle (5) it is still possible to reach at least one energy charging station,
**that**, inasmuch as it is no longer possible to reach an energy charging station with the vehicle (5), in terms of time, even prior to the stranding of the vehicle (5), automatically by means of a vehicle-side telephone device (7), connected with signal technology with the navigation device, a telephone connection is established with a help centre (11) external to the vehicle, or
**that**, inasmuch as it is no longer possible to reach an energy charging station with the vehicle (5), in terms of time, even prior to the stranding of the vehicle (5), it is automatically displayed to the driver by means of a vehicle-side display device (29) actuated by means of the navigation device, that he should establish a telephone connection with a help centre (11) external to the vehicle.

12. Vehicle, in particular motor-vehicle, having a device according to claim 11.

## Revendications

1. Procédé d'assistance d'un conducteur d'un véhicule, dans lequel le véhicule (5) comporte un dispositif de navigation (3) au moyen duquel le conducteur est guidé d'un point de départ à un point d'arrivée via un itinéraire défini, dans lequel un écart du véhicule (5) par rapport à l'itinéraire peut être détecté automatiquement au moyen du dispositif de navigation (3), **caractérisé en ce que,**
dans la mesure où un écart du véhicule (5) par rapport à l'itinéraire est détecté automatiquement au moyen du dispositif de navigation, on détermine au moyen du dispositif de navigation (3) si, avec la quantité d'énergie motrice stockée dans un dispositif accumulateur d'énergie du véhicule (5) en vue de la propulsion du véhicule (5), au moins une station de rechargement en énergie peut encore être atteinte,
**en ce que**, dans la mesure où le véhicule (5) ne peut plus atteindre de station de rechargement en énergie, d'un point de vue temporel, une liaison téléphonique avec un centre de secours (11) extérieur au véhicule est établie automatiquement, avant la panne du véhicule (5), au moyen d'un dispositif téléphonique (7) côté véhicule, ou
**en ce que**, dans la mesure où le véhicule (5) ne peut plus atteindre de station de rechargement en énergie, d'un point de vue temporel, il est signalé automatiquement au conducteur, avant la panne du véhicule (5), au moyen d'un dispositif de signalisation (29) côté véhicule qu'il doit établir une liaison téléphonique avec un centre de secours (11) extérieur au véhicule.

2. Procédé selon la revendication 1, **caractérisé en ce que** le véhicule (5) comporte un dispositif de délivrance de signal d'avertissement (13) au moyen duquel un signal d'avertissement est délivré automatiquement au conducteur si, pour empêcher une panne du véhicule (5), la prochaine station de rechargement en énergie sur l'itinéraire du véhicule (5) doit être rejointe.

3. Procédé selon la revendication 2, **caractérisé en ce que,** au moyen du dispositif de navigation (3), on peut détecter si, après la délivrance du signal d'avertissement, la prochaine station de rechargement en énergie sur l'itinéraire du véhicule (5) va être rejointe,
dans lequel, dans la mesure où, après la délivrance du signal d'avertissement, la prochaine station de rechargement en énergie sur l'itinéraire du véhicule (5) ne va pas être rejointe, on détermine automatiquement au moyen du dispositif de navigation (3) si au moins une station de rechargement en énergie peut encore être atteinte avec le véhicule (5).

4. Procédé selon l'une quelconque des revendications précédentes, **caractérisé en ce que,** dans la mesure où une liaison téléphonique est établie avec le centre de secours (11), en particulier automatiquement, des données de véhicule sont transmises au centre de secours (11) au moyen d'un dispositif de transmission de données (19) côté véhicule.

5. Procédé selon la revendication 4, **caractérisé en ce que** les données de véhicule comprennent des données concernant la position actuelle du véhicule (5) et/ou des données concernant la consommation moyenne d'énergie motrice du véhicule (5) et/ou des données concernant la quantité d'énergie motrice stockée dans le dispositif accumulateur d'énergie du véhicule (5) et/ou des données concernant la consommation d'énergie actuelle, en particulier électrique, du véhicule (5).

6. Procédé selon la revendication 5, **caractérisé en ce que** le véhicule (5) comporte au moins un dispositif de réglage d'énergie (25) au moyen duquel la consommation d'énergie, en particulier électrique, du véhicule (5) peut être réglée et/ou ajustée,
dans lequel, dans la mesure où des données concernant la consommation d'énergie actuelle du véhicule (5) sont transmises au centre de secours (11), le dispositif de réglage d'énergie (25) côté véhicule est réglé et/ou commandé au moyen d'un dispositif de réglage et/ou de commande (27) du centre de secours (11).

7. Procédé selon l'une quelconque des revendications précédentes, **caractérisé en ce que** le centre de secours (11) comporte un dispositif de transmission de données (23) qui peut être relié au dispositif de navigation (3) côté véhicule pour les signaux et au moyen duquel, dans la mesure où une liaison téléphonique avec le centre de secours (11) est établie, en particulier automatiquement, des données géographiques concernant au moins un emplacement de stationnement pouvant encore être atteint avec le véhicule (5) sont transmises au dispositif de navigation (3) côté véhicule.

8. Procédé selon l'une quelconque des revendications précédentes, **caractérisé en ce que,** dans la mesure où le véhicule (5) ne peut plus atteindre de station de rechargement en énergie, du point de vue temporel, un signal d'avertissement est délivré, en particulier automatiquement, avant la panne du véhicule (5), à au moins une partie des véhicules qui se trouvent dans l'environnement du véhicule (5) au moyen d'un dispositif d'émission de signal d'avertissement (15) côté véhicule.

9. Procédé selon l'une quelconque des revendications précédentes, **caractérisé en ce que** le dispositif de navigation (3) dispose de données concernant la consommation moyenne d'énergie motrice du véhicule et/ou de données concernant la quantité d'énergie motrice stockée dans le dispositif accumulateur d'énergie du véhicule (5) et/ou de données concernant la situation de circulation actuelle du véhicule (5) et/ou de données routières et/ou de données concernant la position actuelle du véhicule (5).

10. Procédé selon l'une quelconque des revendications précédentes, **caractérisé en ce que** l'itinéraire est fixé et/ou déterminé de telle manière au moyen du du dispositif de navigation (3) que, lors du respect de l'itinéraire, au moins une station de rechargement en énergie peut encore être atteinte avec le véhicule (5).

11. Système (1) destiné à assister un conducteur d'un véhicule (5), lequel système comporte un dispositif de navigation (3) au moyen duquel le conducteur peut être guidé d'un point de départ à un point d'arrivée via un itinéraire défini, dans lequel un écart du véhicule (5) par rapport à l'itinéraire peut être détecté automatiquement au moyen du dispositif de navigation (3), **caractérisé en ce que,**
dans la mesure où un écart du véhicule (5) par rapport à l'itinéraire est détecté automatiquement au moyen du dispositif de navigation, on détermine au moyen du dispositif de navigation (3) si, avec la quantité d'énergie motrice stockée dans un dispositif accumulateur d'énergie du véhicule (5) en vue de la propulsion du véhicule (5), au moins une station de rechargement en énergie peut encore être atteinte,
**en ce que**, dans la mesure où le véhicule (5) ne peut plus atteindre de station de rechargement en énergie, d'un point de vue temporel, une liaison téléphonique avec un centre de secours (11) extérieur au véhicule est établie automatiquement, avant la panne du véhicule (5), au moyen d'un dispositif téléphonique (7) situé côté véhicule et relié au dispositif de navigation pour les signaux, ou
**en ce que**, dans la mesure où le véhicule (5) ne peut plus atteindre de station de rechargement en énergie, d'un point de vue temporel, il est signalé automatiquement au conducteur, avant la panne du véhicule (5), au moyen d'un dispositif de signalisation (29) situé côté véhicule et commandé au moyen du dispositif de navigation qu'il doit établir une liaison téléphonique avec un centre de secours (11) extérieur au véhicule.

12. Véhicule, en particulier véhicule automobile, avec un système selon la revendication 11.
